# EUROPEAN PATENT SPECIFICATION

(11) **EP 0 931 228 B1**
(45) Date of publication and mention of the grant of the patent: **09.10.2002**
(21) Application number: 98966760.5
(22) Date of filing: 10.07.1998
(51) Int. Cl.: F16H 61/00

(54) **AN ACTUATING DEVICE FOR A CONTINUOUSLY VARIABLE TRANSMISSION**
VERSTELLEINRICHTUNG FÜR EIN STUFENLOSES GETRIEBE
DISPOSITIF DE COMMANDE POUR UNE TRANSMISSION A VARIATION CONTINUE

(30) Priority: 10.07.1997 IT RN000002
(43) Date of publication of application: 28.07.1999
(73) Proprietor: I.P. INNOVATIVE PRODUCTS s.r.l., I-48022 Lugo (Ravenna) (IT)
(72) Inventor: Boiani, Davide, 61100 Pesaro (IT); Giorgi, Gianluca, 61100 Pesaro (IT)
(74) Representative: Pederzini, Paolo
(86) International application number: IB9801057
(87) International publication number: WO99002896

(56) References cited:
- EP-A- 0 558 752
- EP-A- 0 681 119
- EP-A- 0 701 073
- DE-U- 9 208 832
- FR-A- 2 448 078

## Description

### Technical Field

The present invention relates to an actuating device for continuously variable transmission, that is to say, for transmission with a velocity ratio which can be varied gradually. The present actuating device may be applied to transmissions comprising a driving pulley and a driven pulley, connected to one another by a belt, preferably with a trapezoidal cross-section, for the transmission of motion between the two pulleys. At least one of the pulleys has a diameter which can be varied gradually, upon which the drive belt is wound, and which determines the velocity ratio.

Moreover, the actuating device referred to in the present invention can be successfully applied to any type of variable transmission with a ratio which may be varied gradually and in a stepless manner, even with transmission systems other than the belt and pulleys, for example, in the transmissions with friction wheels with or without intermediate elements such as balls, discs, etc.

The device is used, in particular, in the mechanical transmissions of mopeds and small scooters, to which the following description refers, without limiting the scope of application of the invention.

### Background Art

In the above-mentioned mechanical transmissions of the known type, used in particular for mopeds and scooters, for greater clarity hereinafter referred to as speed variators, at least one pulley is embodied in such a way as to comprise two separate discs. Said pulley may be mounted on the driving shaft, as is the case on most scooters, or on the driven shaft, as happens on some mopeds, although the operating principle remains the same. For convenience, the references made here are to the version in which the pulley is mounted on the driving shaft.

The two discs of the pulley are, therefore, mounted coaxial with the driving shaft, with which they are integral during rotation. The outer surfaces of the discs are shaped so that together they delimit a groove between them which houses the flexible element. Moreover, the discs are mounted on the driving shaft, the first in a fixed position and the second in such a way that it can slide, translating along said shaft and varying the width of the groove, allowing the flexible element to be positioned at various distances from the axis of rotation of the driving shaft, corresponding to variations in the velocity ratio between the driving shaft and the driven shaft.

The power supplied by the engine being the same, to adapt the torque and speed of rotation of the driven shaft to the actual locomotion requirements of the vehicle, speed variators of the known type envisage automatic adjustment devices, which effect the necessary corrective action, making use of the forces of inertia induced by the rotation of the driving shaft on masses that are mobile on suitably shaped races made in the mobile disc of the pulley, or the masses are mobile about a hinge, in such a way that they act upon at least a sliding disc of the pulley.

In particular, as the speed of rotation of the driving shaft increases, the masses cause the pulley disc which can slide to move along the axis of rotation, overcoming a resistance created by antagonistic elastic reaction elements, thus narrowing the groove and gradually increasing the distance between the belt and the axis of rotation of the driving shaft; the opposite occurs when the driving shaft speed drops and the elastic reaction elements, overcoming the forces of inertia, create a different equilibrium, corresponding with the widening of the groove and a reduction in the distance between the belt and the axis of rotation.

Speed variators of the above-mentioned type have many advantages, including their extremely simple construction, reliable, safe operation, the overall speed variator being compact and lightweight. However, the speed of the locomotion means, under the various conditions of resistance to forward movement during use, is closely linked to the construction parameters of the speed variator, there being no possibility of modifying it, nor of modulating the performance at the discretion of and according to the requirements of the driver.

Thus, it is impossible to make the speed variator effect a variation in the velocity ratio other than that determined by the inherent construction characteristics of the device comprising the masses. Since the masses are located on the driving shaft and rotate with it, they may unbalance the driving shaft and generate a greater moment of inertia, influencing the changes in the speed of the internal combustion engine because they have the effect of an additional fly-wheel. The moment of inertia varies according co the distance from axis of rotation of the masses which control the mobile disc, so that the response of the internal combustion engine to speed variations depends on the position of the masses. This effect must be avoided for obtaininig unvarying operating features of the internal combustion engine. In document EP-0 558 752 is disclosed a non-stage transmission in a vehicle run by a driving source such as an engine and a motor. The non-stage transmission comprises a drive pulley the groove width thereof is increased or decreased by a change gear ratio changing means using a motor as its driving source, so that the change gear ratio of the non-stage transmission can be varied. The motor is controlled in response to output signals from a throttle opening sensor, an engine revolutions sensor and a vehicle speed sensor.

### Disclosure of the Invention

The aim of the present invention is to provide an actuating device for the control, in a continuously variable transmission, of a wide and continuous variation in the velocity ratio, which is independent of the speed of rotation of the driving shaft.

In a preferred embodiment, the variation in the velocity ratio can be selected and modulated by the driver according to the specific operating requirements of the apparatus or locomotion means to which the continuously variable transmission is applied.

A further advantage of the present invention compared with speed variators with mass adjustment, is the greater use of the surfaces of the pulleys, meaning that a pulley with the same diameter can be used to obtain a larger variation in the velocity ratio.

The technical features of the present invention, in accordance with the afore-mentioned aims, are described in the claims herein, and the advantages of the invention are more clearly described in the detailed description below with reference to the accompanying drawings, which illustrate a preferred embodiment, and in which:
Figure 1 is a schematic perspective assembly view of a continuously variable transmission equipped with a device made in accordance with the present invention;
- Figure 2 is a scaled-up, exploded schematic perspective assembly view of the device disclosed;
- Figure 3 is a schematic functional block diagram of a component of the device disclosed;
- Figures 4 and 5 are side views of some adjustment elements on the device, partially shown in cross-section;
- Figures 6 and 7 illustrate a pulley disc, respectively seen from its axis of symmetry and according to a cross-section along line VII - VII;
- Figures 8 and 9 are two cross-sections of a detail of the invention disclosed;
- Figure 10 illustrates a detail of the device disclosed, seen from the direction indicated by arrow A in Figure 2, with some parts cut away to better illustrate others;
- Figure 11 is a schematic illustration of another embodiment of the device disclosed.

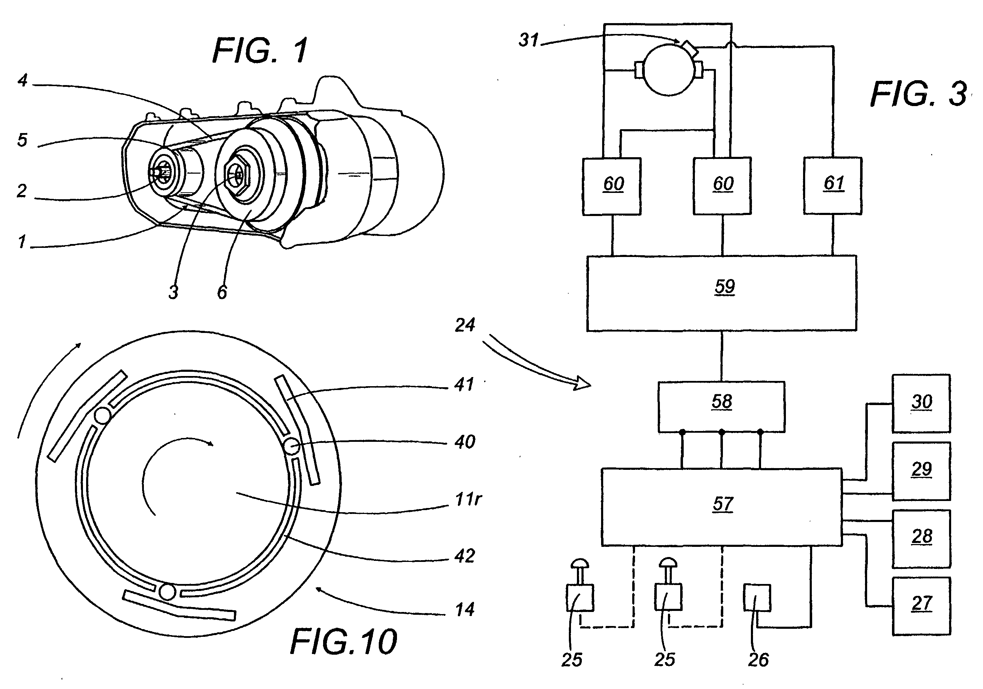

With reference to the accompanying drawings, Figure 1 illustrates a continuously variable transmission 1 designed to transmit mechanical power from a driving shaft 2 to a driven shaft 3, in particular on a scooter or moped, not illustrated.

The continuously variable transmission 1 basically comprises a flexible element 4 and a pair of pulleys 5, 6, the first of which is coupled to the driving shaft 2, whilst the other is mounted on the driven shaft 3.

The flexible element 4, consisting of a belt with a trapezoidal cross-section, is mounted on the pulleys 5, 6, which are surrounded and tightly wrapped so as to create sufficient friction between them and the flexible element 4 to transmit the motion from the driving shaft 2 to the driven shaft 3.

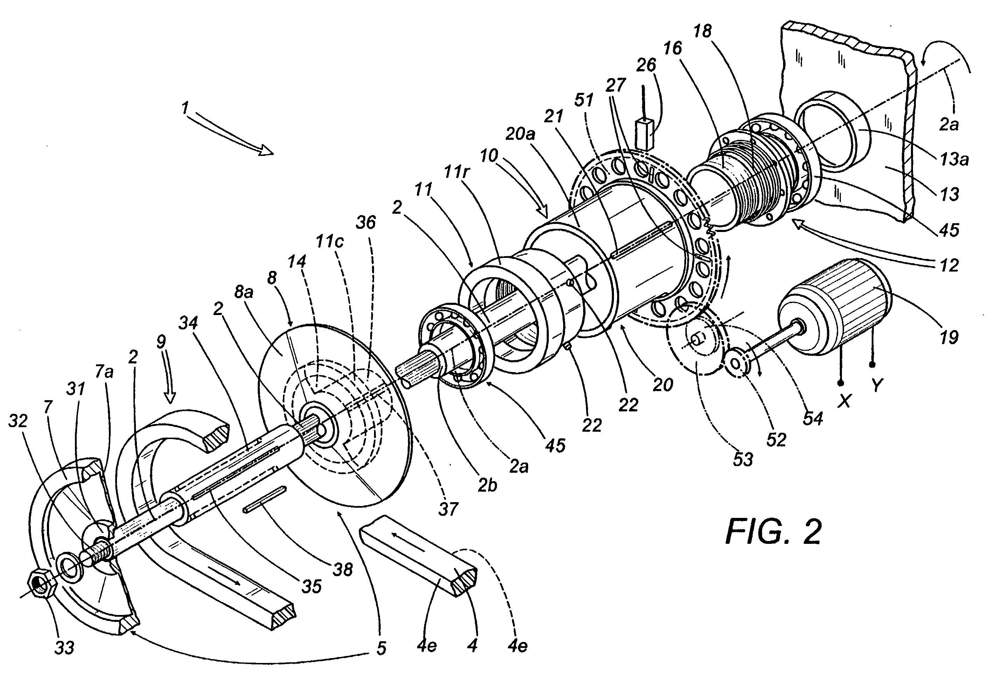

The pulley 5 coupled to the driving shaft 2 comprises (Figure 2) separate first and second discs 7 and 8, which have truncated cone-shaped outer surfaces 7a, 8a. The discs 7, 8 are mounted coaxially on the driving shaft 2, their outer surfaces 7a, 8a being opposite one another and together delimiting an intermediate groove 9 in which the flexible element 4 is housed in such a way that its sides 4e make contact with the outer surfaces 7a and 8a of the discs 7 and 8.

The first disc 7 has a central hub 31, by means of which the disc 7 is mounted on an end pin 32 on the driving shaft 2, to which it is fixed by tightening a nut 33 that pushes the hub 31 against a fixed wall formed by a tubular cylindrical tube 34, which is coaxially mounted on the driving shaft 2 and makes contact, along the axis of rotation 2a of the latter, with a wall 2b of the driving shaft 2.

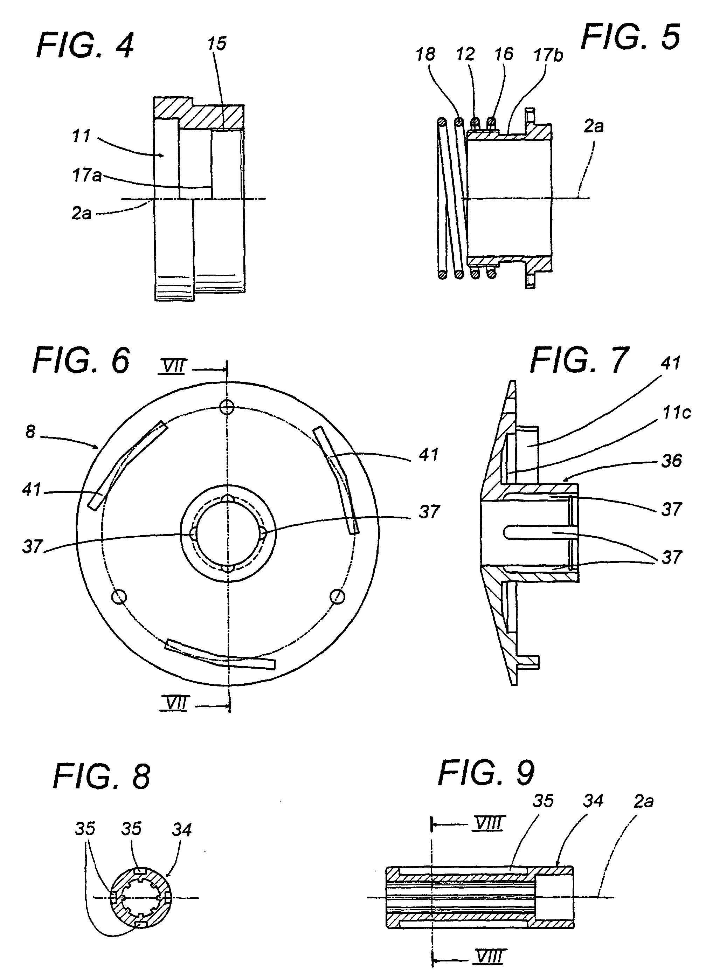

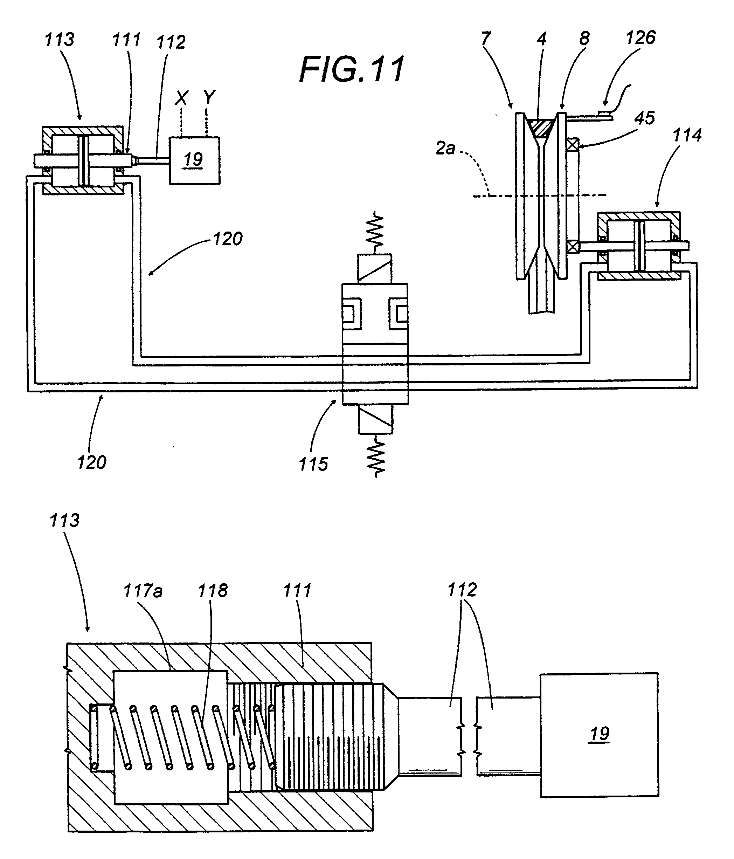

The cylindrical outer surface of the tube 34 has splined seats 35 (Figures 8 and 9), oriented longitudinally to the axis of rotation 2a of the driving shaft 2. Moreover, the cylindrical inner surface of the tube 34 may have splines which match those on the driving shaft 2, so that it is integral with the latter.

The second disc 8 has a central hub 36 with longitudinal internal splines 37 similar to those of the tube 34, but shorter. The hub 36 is mounted coaxially and in such a way that it can slide on the tube 34, to which it is connected by feather keys 38 oriented parallel with the axis of rotation 2a of the driving shaft 2 and partially housed in the splined seats 35 of the tube 34 and partially in the internal splines 37 of the hub 36 of the second disc 8.

When the nut 33 is tightened, the driving shaft 2, tube 34 and first disc 7 become integral with one another and can rotate together about the axis of rotation 2a of the driving shaft 2. The second disc 8, being connected to the tube 34 by means of the feather keys 38, also becomes integral with the driving shaft 2 during rotation about the axis of rotation 2a, but remains free to slide longitudinally to the driving shaft 2. This relative freedom of movement allows the disc 8 to translate on the tube 34, allowing a variation in the width of the groove 9 that houses the flexible element 4 and, therefore, a consequent variation in the velocity ratio of the continuously variable transmission 1 depending on the distances from the axis of rotation 2a assumed by the flexible element in the various positions allowed by the width of the groove 9 deriving from the actual distance between the two discs 7, 8.

The sliding of the second disc 8 along the tube 34 is controlled by a linear actuating device, labelled as a whole with the numeral 10, basically comprising a pair of translation elements 11, 12, motorization means 19, 20 for translation elements and control means 24 suitably connected to the motorization means 19, 20.

The translation elements 11, 12 are tubular sleeves mounted coaxially on the driving shaft 2. A first sleeve 11 comprises a thrust end 11r which, by means of a radial and thrust bearing 45, engages in a matching cavity 11c made in the disc 8 of the first pulley 5, on the opposite side to that facing the flexible element 4.

The bearing 45 is mounted on the thrust end 11r and inside the cavity 11c in the disc 8 in such a way, for example, by interference fits, that the disc 8 and the first sleeve 11 constitute a unit which can slide integrally in an axial direction relative to the tube 34, but the disc 8 is able to rotate relative to the first sleeve 11.

The output shaft of an electric motor 19 is fitted with a pinion 52, which in turn engages with the ring gear 51 by means of a pair of coaxial wheel gears 53, 54. The latter are made in such a way that they further reduce the rotation of the output shaft of the electric motor 19. The ring gear 51 supports a bell 20a, equipped with pulling means 21, 22 for the sleeve 11. Inside the bell 20a is the sleeve 11, which can slide longitudinally to the bell 20a by means of the pulling means 21, 22. The sleeve 11 is, therefore, integral with the bell 20a in rotation, but can slide lengthways relative to the latter.

The disc 8 also comprises (Figure 10) a coupling, labelled as a whole with the numeral 14. This coupling allows the connection of the sleeve 11 to the disc 8 and, therefore, the electric motor 19 to the driving shaft 2, allowing the internal combustion engine to be started by means of the electric motor 19 as it will be explained below. The coupling 14 comprises an idle wheel which comprises a crown wheel 42 that supports rolling elements 40, the disc 8 with several walls 41 arranged substantially along a cylindrical surface and the end 11r of the sleeve 11. The rolling elements 40 are located between the cylindrical outer surface of the end 11r and the walls 41. If the end 11r turns relative to the disc 8 in the direction which leads the rolling elements 40 to make contact with the walls 41, rolling over them, since the walls 41 of the disc 8 are angled with a reduction in the diameter of the cylindrical surface, the rolling elements 40 lock the sleeve 11 to the disc 8, making them integral with one another. When the sleeve 11 and disc 8 rotate in the opposite direction, they are free to rotate relative to one another, since the rolling elements 40 move away from the walls 41.

When the internal combustion engine is started, the electric motor 19 causes the ring gear 51, the bell 20a and, therefore, the sleeve 11 to rotate. The end 11r of the latter causes connection of the coupling 14 which, by means of the disc 8, feather keys 38 and sleeve 34 makes the driving shaft 2 rotate and so starts the internal combustion engine.

The second translation element 12 is a sleeve which is locked, for example by interference fits, to a tubular protrusion 13a of the fixed wall 13 of the housing of the speed variator 1.

The tubular sleeves 11, 12 (Figures 4 and 5) are respectively fitted with a internal screw 15 and a lead screw 16, as well as ring-shaped grooves 17a, 17b whose diameters are respectively larger than and smaller than the core diameter of the internal screw 15 and lead screw 16. The grooves 17a and 17b are positioned longitudinally inside and adjacent to the internal screw 15 and the lead screw 16. When the sleeves 11, 12 are completely screwed together, part of the lead screw 16 is in the groove 17a and part of the internal screw 15 is inside the groove 17b. The two sleeves 11, 12 are, therefore, free to rotate relative to one another.

The tubular sleeves 11, 12 are mounted coaxially on the driving shaft 2, telescopically linked to one another by meshing of the internal screw 15 with the lead screw 16 and also comprise at least one elastic reaction element 18, housed between the sleeves 11 and 12.

The elastic reaction element 18 exerts a direct action parallel with the axis of rotation 2a and oriented in such a way as to move the sleeves 11, 12 away from one another.

The motorization means for the sleeves 11, 12 comprise a rotary coupling 20 and activating motor means associated to the coupling. The coupling 20 comprises the cylindrical tubular bell 20a, which houses the translation sleeve 11 attached to the second disc 8 of the first pulley 5.

The bell 20a is equipped with driving means 21, 22 designed to cause the sleeve 11 attached to the second disc 8 of the first pulley 5 to rotate integral with it about the driving shaft 2; they are also designed to allow the sleeve 11 to move freely along the axis of rotation 2a of the driving shaft 2. Such effects are preferably obtained by means of slots 21 made in the bell 20a and oriented longitudinally to the driving shaft 2, in which pins 22 projecting radially from the side of the sleeve 11 engage in such a way that they can slide.

The coupling 20 has a ring gear 51 engaged by a pinion 52 of the drive means using a pair of intermediate gears 53, 54. As it will be more clearly explained below, the drive means may be the starter motor 19 of the internal combustion engine that powers the moped or scooter.

The control means comprise an electronic card 24, schematically illustrated in Figure 3, interfaced on one side with the X, Y power supply poles of the electric motor 19, and on the other side with at least one sensor 26 and two monostable pushbuttons 25, used to switch adjustment of the speed of the continuously variable transmission 1 on and off. The pushbuttons 25 (which may be substituted with an equivalent single pushbutton of the bistable type) are, in the case of a means of locomotion constituted by a moped or scooter, positioned on the handlebars. When one of the two pushbuttons 25 is activated, the electronic card 24 causes the motor 19 to rotate in a given direction. When the other pushbutton 25 is activated, the polarity of the motor 19 is inverted and the motor 19 is supplied with power in such a way that it rotates in the opposite direction. The card 24 comprises a filter unit 57 for eliminating any electrical interference from the pushbuttons 25 and sensor 26, a microprocessor unit 58 connected to the filter unit 57, an activation unit 59 connected to and controlled by the microprocessor unit 58 for activating the relays 60, and a relay 61. The relays 60 activate the electric motor 19 in both directions of rotation. The relay 61 activates the brake 31 (if present) which may be fitted on the electric motor 19 and which prevents the electric motor 19 from rotating spontaneously when it is not switched on, for example due to vibrations. The sensor 26 transmits to the input of the control card 24 the angular position of the ring gear 51. For example, the sensor 26 illustrated in Figure 2 is a Hall effect sensor, which detects the passage of the magnets 27 located on the ring gear 51. In the example illustrated, there are four magnets 27 set at 90 degrees to one another, allowing the detection of 180 degree rotations by the ring gear 51. Detection of the angular movement of the ring gear 51 allows indirect detection of the position of the sliding disc 8 and, therefore, also allows the velocity ratio to be read. Obviously, other types of sensors may be used, for example, inductive sensors. Moreover, the position of the sliding disc 8 may be detected directly by a suitable linear sensor 126, as illustrated in Figure 11. The sensor 26 (or 126) allows the microprocessor unit to be informed of the actual velocity ratio achieved and allows a given velocity ratio to be precisely obtained irrespective of the state of charge of the battery which powers the starter motor, wear on the latter, etc.

A description of the operation of the control device 10 can be made with reference to Figure 2, observing that when one of the two pushbuttons 25 is activated, the motor 19 rotates the coupling 20 which, depending on the direction of rotation, starts the screwing (or, vice versa, unscrewing) of the sliding sleeve 11 on the fixed sleeve 12. The translation of the sliding sleeve 11, which is completely independent of the speed of rotation of the driving shaft 2, continues until the pushbutton 25 is pressed and held down by the driver. The sleeve 11 attach to the second disc 8 of the first pulley 5 slides along the driving shaft 2 and towards (or, vice versa, away from) the first, fixed disc 7, forcing the flexible element 4 away from the axis of rotation 2a (or, vice versa, towards it) and causes the element to gradually move in a direction radial to the discs 7, 8, resulting in an equally gradual variation in the velocity ratio of the continuosly variable transmission 1.

According to a simpler operating method, the driver can control a small or large variation in the speed of the means of locomotion by simply holding down the pushbutton 25 for a short or long period. When the pushbutton 25 is released, the translation element 11, 12 sliding command stops, the second disc 8 of the first pulley 5 stops in the last position reached relative to the first disc 7 and the velocity ratio of the continuosly variable transmission 1 is maintained until the pushbutton 25 initially pressed is pressed again or, vice versa, the other pushbutton 25 is pressed. In the latter case, sliding of the sleeve 11 is activated in the opposite direction, so that it moves away from the fixed disc 7 and allows the flexible element 4 to enter deeper into the groove 9 and push the second disc 8 of the first pulley 5 against the thrust end 11r of the sleeve 11 adjacent to said disc 8. The sensor 26 is not necessary for this operating method.

According to another operating method, each time the pushbutton 25 is pressed, there is a corresponding given movement of the mobile disc. This movement is checked by the sensor 26. In this case, the microprocessor unit 58 stores a given number of preset positions of the ring gear 51 and, therefore, of the sliding disc 8, for example 5 or 6 positions, which simulate a conventional 5 or 6 speed gear box and correspond with 5 or 6 different gear ratios.

Thus, each time the pushbutton 25 is pressed, the velocity ratio is changed. The data contained in the microprocessor unit 58 relative to the various velocity ratios can also be modified, as regards both the number of ratios and the values of the ratios, by connecting the unit 58 to an external computer and suitably modifying the program stored.

In accordance with a further operating method, the speed variator is activated in a gradual, automatic manner. In this case, see also Figure 3, it may be necessary to gather other information using other sensors, for example the vehicle speed sensor 27, the engine rotation speed sensor 28, the throttle position sensor 29, etc. In this case, various operating methods are possible: with maximum acceleration, with maximum speed, with minimum consumption, etc.

Another useful function which may be added to the control unit 24 is that of limiting and adjusting the speed. This function may be activated by the driver of the vehicle or may be activated automatically by operating the sensor 30 from the outside, using a radio signal or other suitable signal, for example, when the vehicle joins a motorway or enters a town.

In the case illustrated in Figure 2, the internal combustion engine of the vehicle rotates anti-clockwise (see the direction of the arrow near the ring gear 51), thus, to allow activation of the control device 10 by means of the starter motor 19, the internal screw 15 and lead screw 16 have a left-hand thread, that is to say, oriented in such a way that the sliding disc 11 is completely screwed onto the fixed disc 12, when the rotary coupling 20 is caused to rotate as the engine of the vehicle is started. Under such conditions, the sliding sleeve 11 and fixed sleeve 12 achieve maximum reciprocal penetration, along the axis of rotation 2a, whilst the internal screw 15 and lead screw 16 disengage and respectively penetrate grooves 17b and 17a in the two sleeves 11, 12. This condition allows the sliding sleeve 11 to rotate freely relative to the fixed sleeve 12, allowing the control device 10 to be switched off, so as to allow use of the starter motor 19 to start up the engine (in an anti-clockwise direction) in the above-mentioned conventional manner. Moreover, under such conditions, the discs 7 and 8 of the first pulley 5 are at the maximum distance from one another, whatever the final configuration of the continuously variable transmission 1 when the engine of the locomotion means stops. Of course, if the engine rotates in a clockwise direction, the two sleeves 11, 12 must have a right-hand thread.

Since the sleeves 11 and 12 are held with the respective internal screw 15 and lead screw 16 in contact with and axial to one another by the intervention of the elastic reaction element 18, inverting the direction of rotation of the mobile sleeve 11 relative to the fixed sleeve 12 immediately restores the engagement of the nut screw 15 with the lead screw 16, whilst the starter motor 19 is again used only for operation of the control device 10, as described above.

A control device 10 of the above-mentioned type, therefore, allows the control in a continuously variable transmission 1, of a variation in the velocity ratio that can be modulated at the discretion of the driver. This allows the continuously variable transmission 1 to be used as a gear box, but one in which the number of gears and their division can be freely selected by the driver, according to his/her driving technique. The device is also made in a particularly simple, economical solution, with the further advantage of being available in an easily assembled kit that can be adapted to speed variators already in use on mopeds or scooters currently produced.

Such devices can be advantageously used where the starter motor 19 for the engine is on the same side as the mobile disc 8, thus facilitating operation of the starter motor as the actuating device for the continuously variable transmission.

If the starter motor 19 is in a different position, as illustrated in Figure 11, it is still possible to use it as the actuating device for the speed variator by fitting a control system between them, which may be hydraulic or mechanical with flexible cables. In the embodiment illustrated in Figure 11, the actuating device comprises a hydraulic cylinder 113, activated by the starter motor 19 by means of a connection using a lead screw 112 and a internal screw 111. The cylinder 113 is connected by hoses 120 and a valve 115 to an activation cylinder 114, which is in turn connected to the sliding disc 8. The valve 115 can be used to interrupt operation of the device for maintenance, etc.

The screw 112 and the nut screw 111 fulfil a function similar to that of the sleeves 11 and 12 and, therefore, disengage when the engine must be started, then the spring 118 allows the screw 112 to engage with the nut screw 111 and the starter motor 19 may be used to activate the speed variator.

## Claims

1. An actuating device for controlling a variation in the velocity ratio of a continuously variable transmission (1), being designed to transmit the power of an internal combustion engine from a driving shaft (2) to a driven shaft (3), in which the continuously variable transmission (1) comprises a flexible element (4) with the shape of a closed loop, a first and second pulley (5, 6), being mounted respectively on the driving shaft (2) and the driven shaft (3) and being surrounded by the flexible element (4), at least the first pulley (5) having a first and second disc (7, 8), said discs being mounted coaxial with the driving shaft (2) with which they rotate integrally about a shared axis of rotation (2a), said first and second discs (7, 8) having outer surfaces (7a, 8a) shaped in such a way that together they delimit a groove (9) which houses the flexible element (4), and being mounted on the driving shaft (2), the first disc (7) in a fixed position and the second disc (8) so that it can translate along the driving shaft (2) and vary the width of the groove (9), allowing the flexible element (4) to take up corresponding positions at various distances from the axis of rotation (2a) of the driving shaft (2), the actuating device (10) comprising a linear actuating device (11, 12, 13) for moving the mobile disc (8), being controlled by motorization means (19, 20) independent of the speed of rotation of the driving shaft (2), and control means (24), the latter being connected to the motorization means (19, 20), the linear actuating device comprises a first translation element (11), being connectable by means of a support (45) to the second disc (8), in such a way that the disc (8) and first element (11) can rotate freely relative to one another, and allowing the translation of the disc (8) and element (11), there being a second translation element (12) attached to the first element (11) in such a way that a relative rotation between the first (11) and second (12) elements is transformed into a relative translation between the elements, **characterised in that** the device also comprises disengagement means (17a, 17b, 18) for disengaging the first and second elements, allowing their free relative rotation, when the first and second elements reach the end of stroke in their relative translation, and **in that** the motorization means (19, 20) for the pair of elements (11, 12) comprise the starter motor (19) of the internal combustion engine that powers the means of locomotion.

2. The device as described in claim 1, **characterised in that** the first and second translation elements are tubular sleeves (11, 12) attached to one another telescopically, respectively having a internal screw (15) and lead screw (16) which are reciprocally engaged and being designed to allow the relative rototranslation of the sleeves (11, 12) about and along the axis of rotation (2a) of the driving shaft (2).

3. The device as described in claim 1 or 2, **characterised in that** the disengagement means comprise ring-shaped grooves (17a, 17b) made in the sleeves (11, 12) and located at one end of the internal screw (15) and lead screw (16), being designed to allow disengagement of the internal screw (15) and lead screw (16), allowing the sleeves (11, 12) to rotate freely about the axis of rotation (2a) of the driving shaft (2) when the sleeves (11, 12) reach the maximum reciprocal penetration condition according to the direction of the axis of rotation (2a).

4. The device as described in claim 3, **characterised in that** the internal screw (15) and lead screw (16) have threads oriented in such a way as to allow the achievement of the condition in which the sleeves (11, 12) rotate freely at the starting moment of the drive shaft (2) of the propulsion engine.

5. The device as described in claim 4, **characterised in that** the internal screw (15) and lead screw (16) have a left-hand thread if the propulsion engine rotates in an anti-clockwise direction.

6. The device as described in claim 4, **characterised in that** the internal screw (15) and lead screw (16) have a right-hand thread if the propulsion engine rotates in a clockwise direction.

7. The device as described in claim 4, **characterised in that** it comprises elastic reaction elements (18), these being mounted between the sleeves (11, 12) in such a way as to exert a direct action along the shared axis of rotation (2a) and being oriented in such a way that they move the sleeves (11, 12) away from one another, holding the internal screw (15) and lead screw (16) in contact with one another in the maximum reciprocal axial penetration condition, said elastic reaction elements (18) allowing automatic restoration of the engagement between the internal screw (15) and lead screw (16) when the relative direction of rotation of said sleeves (11, 12) is inverted, determining their reciprocal penetration.

8. The device as described in claim 1, **characterised in that** the motorization means comprise a motor (19) and a rotary coupling (20), the latter having driving means (21, 22) which drive the translation element (11) attachable to the second disc (8) of the first pulley (5), the driving means (21, 22) being designed to make the coupling (20) and translation element (11) rotate together about the axis (2a) of the driving shaft (2), instead allowing them to move freely along said axis of rotation (2a).

9. The device as described in claim 8 **characterised in that** the coupling (20) comprises a tubular bell (20a), housing the adjustment element (11) integral with the second disc (8) of the first pulley (5), the driving means consisting of at least one slot (21) made in the bell (20a) and a corresponding pin (22), said pin being attached to the adjustment element (11) and sliding within the slot (21) in the bell (20a).

10. The device as described in claim 1, **characterised in that** the control means comprise an electronic card (24) and at least one control pushbutton (25), it being possible to switch said pushbutton between two states, the card (24) and pushbutton (25) being functionally interconnected with the motorization means (19, 20) in such a way that they switch the latter on or off when the state of the pushbutton (25) is switched, allowing control of the variation in the distance between the translation elements (11, 12) for the time necessary to modulate the velocity ratio of the continuously variable transmission (1).

11. The device as described in claim 10, **characterised in that** the electronic card (24) comprises a sensor (26; 126) for detecting the actual position of the second sliding disc (8) and, therefore, detecting the actual velocity ratio so as to precisely obtain a given velocity ratio irrespective of the state of the battery which powers the starter motor (19) and any wear on the latter.

12. The device as described in claim 10 or 11, **characterised in that** the electronic card (24) comprises a filter unit (57), said unit eliminating any electrical interference from the pushbuttons (25) and the sensor (26; 126), a microprocessor unit (58), the latter being connected to the filter unit (57), an activation unit (59), being connected to and controlled by the microprocessor unit (58), relays (60, 61) for controlling the motor (19), the relays (60, 61) being activated by the unit (59).

## Patentansprüche

1. Verstelleinrichtung zum Verändern des Übersetzungsverhältnisses bei einem stufenlosen Getriebe (1), dazu bestimmt, die Leistung eines Verbrennungsmotors von einer Antriebswelle (2) auf eine Abtriebswelle (3) zu übertragen, in welcher das stufenlose Getriebe (1) ein flexibles Element (4) in Form einer geschlossenen Schlaufe enthält, eine erste und zweite Riemenscheibe (5, 6), montiert jeweils auf der Antriebswelle (2) und auf der Abtriebswelle (3) und umgeben von dem flexiblen Element (4), wobei wenigstens die erste Riemenscheibe (5) erste und zweite Scheiben (7, 8) hat, wobei die genannten Scheiben koaxial zu der Antriebswelle (2) montiert sind, mit welcher zusammen sie sich fest verbunden um eine gemeinsame Drehachse (2a) drehen, wobei die genannten ersten und zweiten Scheiben (7, 8) äussere Oberflächen (7a, 8a) aufweisen, die auf solche Weise geformt sind, dass sie zusammen eine Rille (9) beschreiben, welche das flexible Element (4) aufnimmt, und wobei auf der Antriebswelle (2) die erste Scheibe (7) in einer feststehenden Position montiert ist und die zweite Scheibe (8) so, dass sie entlang der Antriebswelle (2) gleiten und die Breite der Rille (9) verändern kann, wodurch es dem flexiblen Element (4) erlaubt ist, entsprechende Positionen in unterschiedlichen Abständen von der Drehachse (2a) der Antriebswelle (2) einzunehmen, wobei die Verstellvorrichtung (10) einen linearen Schubantrieb (11, 12, 13) zum Verschieben der beweglichen Scheibe (8) enthält, gesteuert von Antriebsmittel (19, 20) unabhängig von der Umdrehungsgeschwindigkeit der Antriebswelle (2), sowie Steuermittel (24), letztere an die Antriebsmittel (19, 20) angeschlossen, wobei der lineare Schubantrieb ein erstes Verschiebeelement (11) enthält, das mit Hilfe eines Lagers (45) auf solche Weise an die zweite Scheibe (8) anschliessbar ist, dass die Scheibe (8) und das erste Element (11) sich frei zueinander drehen können und das Gleiten der Scheibe (8) und des Elementes (11) erlauben, wobei ein zweites Verschiebeelement (12) auf solche Weise an das erste Element (11) angeschlossen ist, dass eine entsprechende Umdrehung zwischen den ersten (11) und zweiten (12) Elementen in eine entsprechende Verschiebung zwischen den Elementen umgewandelt wird, **dadurch gekennzeichnet, dass** die Einrichtung ebenfalls Freigabemittel (17a, 17b, 18) zur Freigabe der ersten und zweiten Elemente enthält, die deren entsprechende freie Umdrehung erlauben, wenn die ersten und zweiten Elemente am Ende ihres entsprechenden Verschiebungshubs angelangt sind, und dadurch, dass die Antriebsmittel (19, 20) für das Paar von Elementen (11, 12) den Anlasser (19) für den Verbrennungsmotor enthalten, welcher das Fortbewegungsmittel mit Leistung speist.

2. Einrichtung nach Patentanspruch 1, **dadurch gekennzeichnet, dass** die ersten und zweiten Verschiebeelemente aus rohrförmigen Muffen (11, 12) bestehen, die teleskopisch aneinander befestigt sind, wobei sie jeweils ein Innengewinde (15) und eine Leitschraube (16) aufweisen, welche gegenseitig ineinandergreifen und dazu dienen, die entsprechende Drehverschiebung der Muffen (11, 12) um und entlang der Drehachse (2a) der Antriebswelle (2) zu erlauben.

3. Einrichtung nach Patentanspruch 1 oder 2, **dadurch gekennzeichnet, dass** die Freigabemittel ringförmig ausgebildete Rillen (17a, 17b) enthalten, die in die Muffen (11, 12) eingearbeitet, an einem Ende des Innengewindes (15) und der Leitschraube (16) angeordnet und dazu bestimmt sind, die Freigabe des Innengewindes (15) und der Leitschraube (16) zu ermöglichen und es den Muffen (11, 12) zu erlauben, sich frei um die Drehachse (2a) der Antriebswelle (2) zu drehen, wenn die Muffen (11, 12) den Zustand des maximalen Ineinanderschiebens in der Richtung der Drehachse (2a) erreichen.

4. Einrichtung nach Patentanspruch 3, **dadurch gekennzeichnet, dass** das Innengewinde (15) und die Leitschraube (16) auf solche Weise ausgerichtete Gewinde aufweisen, dass das Erreichen des Zustandes erlaubt ist, in welchem sich die Muffen (11, 12) beim Anlaufen der Antriebswelle (2) des Motors frei drehen.

5. Einrichtung nach Patentanspruch 4, **dadurch gekennzeichnet, dass** das Innengewinde (15) und die Leitschraube (16) ein linksdrehendes Gewinde haben, wenn sich der Antriebsmotor in Gegenuhrzeigerrichtung dreht:

6. Einrichtung nach Patentanspruch 4, **dadurch gekennzeichnet, dass** das Innengewinde (15) und die Leitschraube (16) ein rechtsdrehendes Gewinde haben, wenn sich der Antriebsmotor in Uhrzeigerrichtung dreht.

7. Einrichtung nach Patentanspruch 4, **dadurch gekennzeichnet, dass** sie elastische Reaktionselemente (18) enthält, wobei diese zwischen den Muffen (11, 12) auf solche Weise angeordnet sind, dass sie eine direkte Wirkung entlang der gemeinsamen Drehachse (2a) ausüben, und wobei diese Wirkung auf solche Weise ausgerichtet ist, dass sie die Muffen (11, 12) voneinander fort bewegt und dabei das Innengewinde (15) und die Leitschraube (16) im Kontakt miteinander hält, und zwar im Zustand des maximalen gegenseitigen, axialen Eingriffes, wobei die genannten elastischen Reaktionselemente (18) das automatische Wiederherstellen des Eingriffes zwischen dem Innengewinde (15) und der Leitschraube (16) erlauben, wenn die entsprechende Drehrichtung der genannten Muffen (11, 12) umgekehrt wird und deren gegenseitiges Ineinanderschieben bewirkt.

8. Einrichtung nach Patentanspruch 1, **dadurch gekennzeichnet, dass** die Antriebsmittel einen Motor (19) und eine Drehkupplung (20) enthalten, letztere versehen mit Mitnehmermitteln (21, 22), welche das an die zweite Scheibe (8) der ersten Riemenscheibe (5) anschliessbare Verschiebeelement (11) in die Bewegung mitziehen, wobei die Mitnehmermittel (21, 22) dazu bestimmt sind, die Kupplung (20) und das Verschiebeelement (11) zusammen um die Drehachse (2a) der Antriebswelle (2) drehen zu lassen, während sie ihnen erlauben, sich frei entlang der genannten Drehachse (2a) zu bewegen.

9. Einrichtung nach Patentanspruch 8, **dadurch gekennzeichnet, dass** die Kupplung (20) eine rohrförmige Glocke (20a) enthält, welche das fest mit der zweiten Scheibe (8) der ersten Riemenscheibe (5) verbundene Verstellelement (11) aufnimmt, wobei die Mitnehmermittel aus wenigstens einem in die Glocke (20a) eingearbeiteten Schlitz (21) bestehen und aus einem entsprechenden Zapfen (22), wobei der genannte Zapfen an dem Verstellelement (11) befestigt ist und in dem Schlitz (21) in der Glocke (20a) gleitet.

10. Einrichtung nach Patentanspruch 1, **dadurch gekennzeichnet, dass** die Steuermittel eine elektronische Schaltplatte (24) enthalten sowie wenigstens eine Drucktaste (25) zum Betätigen, wodurch es möglich ist, die genannte Drucktaste (25) zwischen zwei Zuständen umzuschalten, wobei die Schaltplatte (24) und die Drucktaste (25) funktionell mit den Antriebsmittel (19, 20) auf solche Weise verbunden sind, dass sie letztere einoder ausschalten, je nach dem geschalteten Zustand der Drucktaste (25), wodurch das Steuern der Veränderung des Abstandes zwischen den Verschiebeelementen (11, 12) für die notwendige Dauer erlaubt ist, um das Übersetzungsverhältnis des stufenlosen Getriebes (1) zu regulieren.

11. Einrichtung nach Patentanspruch 10, **dadurch gekennzeichnet, dass** die elektronische Schaltplatte (24) einen Sensor (26; 126) zum Erfassen der augenblicklichen Position der zweiten gleitenden Scheibe (8) enthält, und somit zum Erfassen des augenblicklichen Übersetzungsverhältnisses, so dass mit Genauigkeit ein bestimmtes Übersetzungsverhältnis erhalten wird, unabhängig von dem Ladezustand der Batterie, welche den Anlasser (19) speist, und jedem Verschleiss von letzterem.

12. Einrichtung nach Patentanspruch 10 oder 11, **dadurch gekennzeichnet, dass** die elektronische Schaltplatte (24) eine Filtereinheit (57) enthält, wobei die genannte Einheit jede elektrische Störung durch die Drucktasten (25) und die Sensoren (26; 126) beseitigt; eine Mikroprozessoreinheit (58), letztere angeschlossen an die Filtereinheit (57); eine Aktiviereinheit (59), die an die Mikroprozessoreinheit (58) angeschlossen ist und von dieser gesteuert wird; Relais (60, 61) zum Auslösen des Motors (19), wobei die Relais (60, 61) durch die Einheit (59) aktiviert werden.

## Revendications

1. Un dispositif de commande pour commander une variation du rapport de vitesse d'une transmission (1) à variation continue destinée à transmettre la puissance d'un moteur à combustion interne d'un arbre moteur (2) à un arbre mené (3), dans lequel la transmission (1) à variation continue comprend un élément flexible (4) conformé en boucle fermée, une première et une deuxième poulies (5, 6) montées, respectivement, sur l'arbre moteur (2) et l'arbre mené (3) et entourées par ledit élément flexible (4), au moins la première poulie (5) ayant un premier et un deuxième disque (7, 8), lesdits disques étant montés coaxiaux à l'arbre moteur (2) avec lequel ils tournent de manière solidaire autour d'un axe de rotation (2a) commun, lesdits premier et deuxième disques (7, 8) ayant des surfaces extérieures (7a, 8a) conformées de manière à délimiter ensemble une gorge (9) qui loge l'élément flexible (4), et étant montés sur l'arbre moteur (2), le premier disque (7) dans une position fixe et le deuxième disque (8) de manière à pouvoir se déplacer par translation le long de l'arbre moteur (2) et varier la largeur de la gorge (9), permettant à l'élément flexible (4) de prendre des positions correspondantes à des distances différentes de l'axe de rotation (2a) de l'arbre moteur (2), ledit dispositif de commande (10) comprenant un actionneur linéaire (11, 12, 13) pour déplacer le disque mobile (8), commandé par des moyens de motorisation (19, 20) indépendants de la vitesse de rotation de l'arbre moteur (2), et des moyens de commande (24) reliés aux moyens de motorisation (19, 20), l'actionneur linéaire comprenant un premier élément de translation (11) pouvant être relié par l'intermédiaire d'un support (45) au deuxième disque (8), de manière à ce que le disque (8) et le premier élément (11) puissent tourner librement l'un par rapport à l'autre et permettre ainsi la translation du disque (8) et de l'élément (11), et un deuxième élément de translation (12) associé au premier élément (11) de manière à ce qu'une rotation relative entre les premier (11) et deuxième (12) éléments soit transformée en une translation relative entre ces mêmes éléments, ledit dispositif étant **caractérisé en ce qu'**il comprend aussi des moyens de débrayage (17a, 17b, 18) pour débrayer les premier et deuxième éléments, et donc permettre leur rotation libre relative, quand ces mêmes premier et deuxième éléments atteignent le fin de course dans leur translation relative, et **en ce que** les moyens de motorisation (19, 20) de la paire d'éléments (11, 12) comprennent le démarreur (19) du moteur à combustion interne qui propulse le moyen de locomotion.

2. Le dispositif selon la revendication 1, **caractérisé en ce que** lesdits premier et deuxième éléments de translation sont des manchons tubulaires (11, 12) accouplés de manière télescopique et ayant, respectivement, une vis interne (15) et une vis mère (16) qui sont réciproquement mises en prise et sont destinées à permettre la roto-translation relative des manchons (11, 12) autour et le long de l'axe de rotation (2a) de l'arbre moteur (2).

3. Le dispositif selon la revendication 1 ou 2, **caractérisé en ce que** lesdits moyens de débrayage comprennent des gorges annulaires (17a, 17b) réalisées dans les manchons (11, 12) et situées à une extrémité de la vis interne (15) et de la vis mère (16), et étant destinées à permettre à la vis interne (15) et à la vis mère (16) de se dégager de leur mise en prise réciproque pour permettre aux manchons (11, 12) de tourner librement autour de l'axe de rotation (2a) de l'arbre moteur (2) quand ces mêmes manchons (11, 12) atteignent la condition de compénétration maximale selon la direction de l'axe de rotation (2a).

4. Le dispositif selon la revendication 3, **caractérisé en ce que** la vis interne (15) et la vis mère (16) ont des filets orientés de manière à pouvoir atteindre la condition dans laquelle les manchons (11, 12) tournent librement au moment du démarrage de l'arbre moteur (2) du moteur de propulsion.

5. Le dispositif selon la revendication 4, **caractérisé en ce que** la vis interne (15) et la vis mère (16) ont un filetage à gauche si le moteur de propulsion tourne en sens anti-horaire.

6. Le dispositif selon la revendication 4, **caractérisé en ce que** la vis interne (15) et la vis mère (16) ont un filetage à droite si le moteur de propulsion tourne en sens horaire.

7. Le dispositif selon la revendication 4, **caractérisé en ce qu'**il comprend des éléments de réaction élastique (18) montés entre les manchons (11, 12) de manière à exercer une action directe le long de l'axe de rotation commun (2a) et orientée de manière à éloigner les manchons (11, 12) l'un de l'autre, en maintenant la vis interne (15) et la vis mère (16) en contact réciproque dans la condition de compénétration axiale maximale, lesdits éléments de réaction élastique (18) permettant le rétablissement automatique de la mise en prise entre la vis interne (15) et la vis mère (16) quand le sens de rotation relatif des manchons (11, 12) est inversé, déterminant leur pénétration réciproque.

8. Le dispositif selon la revendication 1, **caractérisé en ce que** les moyens de motorisation comprennent un moteur (19) et un joint rotatif (20), ce dernier ayant des moyens d'entraînement (21, 22) qui entraînent l'élément de translation (11) pouvant être associé au deuxième disque (8) de la première poulie (5), ces moyens d'entraînement (21, 22) étant destinés à faire tourner ensemble le joint (20) et l'élément de translation (11) autour de l'axe (2a) de l'arbre moteur (2) tout en leur permettant, en revanche, de se déplacer librement le long de ce même axe de rotation (2a).

9. Le dispositif selon la revendication 8, **caractérisé en ce que** ledit joint (20) comprend une cloche tubulaire (20a), logeant l'élément de réglage (11) solidaire du deuxième disque (8) de la première poulie (5), les moyens d'entraînement étant constitués par au moins une fente (21) réalisée sur la cloche (20a) et une goupille (22) correspondante, ladite goupille étant associée à l'élément de réglage (11) et coulissant à l'intérieur de la fente (21) de la cloche (20a).

10. Le dispositif selon la revendication 1, **caractérisé en ce que** les moyens de commande comprennent une carte électronique (24) et au moins un bouton de commande (25) pouvant être commuté entre deux états, la carte (24) et le bouton (25) étant fonctionnellement interconnectés avec les moyens de motorisation (19, 20) de manière à activer ou désactiver ces derniers selon l'état de commutation du bouton (25), permettant de commander la variation de distance entre les éléments de translation (11, 12) pendant le temps nécessaire pour moduler le rapport de vitesse de la transmission (1) à variation continue.

11. Le dispositif selon la revendication 10, **caractérisé en ce que** la carte électronique (24) comprend un capteur (26; 126) pour détecter la position réelle du deuxième disque coulissant (8), et donc détecter le rapport de vitesse réel, de manière à obtenir avec précision un rapport de vitesse donné indépendamment de l'état de la batterie qui alimente le démarreur (19) et de l'usure de ce dernier.

12. Le dispositif selon la revendication 10 ou 11, **caractérisé en ce que** la carte électronique (24) comprend une unité de filtrage (57), ladite unité éliminant toutes interférences électriques des boutons (25) et du capteur (26; 126), une unité à microprocesseur (58), reliée à l'unité de filtrage (57), une unité d'activation (59), reliée à l'unité à microprocesseur (58) et commandée par cette dernière, des relais (60, 61) pour commander le moteur (19), ces relais (60, 61) étant activés par l'unité (59).
